# EUROPEAN PATENT APPLICATION

(11) **EP 1 336 870 A2**
(43) Date of publication of application: **20.08.2003**
(21) Application number: 02022703.9
(22) Date of filing: 10.10.2002
(51) Int. Cl.: G02B 5/20, G02B 5/28, G02B 6/293, G01J 3/26

(54) **Optical systems using tunable optical filters and related methods**

(30) Priority: 11.02.2002 US 73747
(71) Applicant: Agilent Technologies, Inc., Palo Alto, CA 94306 (US)
(72) Inventor: Gordon, Gary B., Saratoga, CA 95070 (US)
(74) Representative: Liesegang, Eva

(57) **Abstract**

Optical systems are provided. A representative optical system (10) includes an optical filter (100) that incorporates an optical filter component (106) and a tuning assembly (108). The optical filter component includes a propagation axis (222) and exhibits a length of physical path along the optical path of the optical filter. The optical filter component is adapted to receive an optical signal so that, in response to the optical signal, the optical filter component propagates at least a first frequency of light. The tuning assembly engages the optical filter component and is adapted to alter the length of the physical path along the propagation axis. In this manner, the optical filter component propagates at least a second frequency of light in response to the optical signal. Methods and other systems also are provided.

## Description

### BACKGROUND OF THE INVENTION

### FIELD OF THE INVENTION

The present invention generally relates to optics. More specifically, the invention relates to systems incorporating optical filters that can be tuned to enable or, alternatively, inhibit transmission of one or more wavelengths of light selected from a band of wavelengths. Related methods also are provided.

### DESCRIPTION OF THE RELATED ART

Optical filtering, such as optical bandpass filtering, is used in numerous applications where it is desirable to inhibit the propagation of all but select wavelengths of light along an optical path. A known technique for optical bandpass filtering involves the use of an optical bandpass filter. Such a filter includes one or more material layers, each of which is provided at a predetermined thickness. This filter inhibits the propagation of all but select wavelengths of light due to the interaction of the refractive indices and optical path lengths of the material layers with the light propagating through the filter, as well as the optical properties associated with boundaries formed between adjacent material layers.

Producing an optical bandpass filter like the one described above can be difficult since the manufacturing tolerances associated with forming the material layers can be quite small. Failure to comply with these manufacturing tolerances can result in a filter that does not exhibit the desired center frequency.

An optical bandpass filter that does not exhibit a desired center frequency oftentimes can be tuned so that it exhibits the desired center frequency. For instance, the center frequency can be tuned by tilting the propagation axis of the optical filter so that the length of the physical path of the filter through which optical signals propagate changes. By tilting the filter relative to the propagation axis, the interactions of the refractive indexes and optical path lengths of the material layers of the filter are altered.

Unfortunately, however, the length of the physical path of an optical bandpass filter also can change in response to a change in temperature. Therefore, the center frequency of an optical bandpass filter typically drifts with changes in temperature. Thus, it can be appreciated that it is desirable to provide optical systems and related methods that address these and/or other perceived shortcomings of the prior art.

### SUMMARY OF THE INVENTION

Briefly described, the invention involves optical filter tuning. In particular, the invention involves tuning of optical filters by compressing and/or decompressing at least a portion of each of the filters. In this manner, the length of the physical path of an optical filter can be altered, which alters the propagation characteristics of the filter. In some embodiments, the compressing and/or decompressing can be performed while tilting the optical filter with respect to the propagation axis of the filter while, in others, tilting is not performed. Additionally, in some embodiments, the compressing and/or decompressing can be performed to compensate for drift, such as temperature drift, of the filter.

Optical systems of the invention incorporate at least one optical filter. In this regard, an embodiment of an optical system includes an optical filter that incorporates an optical filter component and a tuning assembly. The optical filter component includes a propagation axis and exhibits a physical path along which optical signals propagate through the optical filter. The optical filter component is adapted to receive an optical signal so that, in response to the optical signal, the optical filter component propagates at least a first frequency of light. The tuning assembly engages the optical filter component and is adapted to alter the length of the physical path along the propagation axis. In this manner, the optical filter component propagates at least a second frequency of light that is different than the first frequency of light in response to the optical signal.

Methods for tuning an optical filter also are provided. An embodiment of a method includes: providing an optical filter component having a propagation axis and exhibiting a physical path along which light propagates; arranging the optical filter component along the optical path of the optical filter; and altering the length of the physical path along the propagation axis.

Clearly, some embodiments of the invention may exhibit features and/or advantages in addition to, or in lieu of, those recited above. Additionally, other systems and/or methods of the present invention will be or may become apparent to one with skill in the art upon examination of the following drawings and detailed description. It is intended that all such additional systems, methods, features, and/or advantages be included within this description, be within the scope of the present invention, and be protected by the accompanying claims.

### BRIEF DESCRIPTION OF THE DRAWINGS

The invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views.

FIG. 1 is a schematic diagram depicting an embodiment of an optical system of the invention.

FIG. 2 is a schematic diagram depicting an embodiment of an optical filter component that can be used in an optical system of the invention.

FIG. 3 is a schematic diagram of the optical filter component of FIG. 2 shown under compression.

FIG. 4 is a schematic diagram of the optical filter component of FIG. 2 shown under tension.

FIG. 5 is a flowchart depicting an embodiment of a method of the present invention.

FIG. 6 is a schematic view of an embodiment of an optical bandpass filter that can be used to implement the optical system of FIG. 1.

FIG. 7 is a schematic view of another embodiment of an optical bandpass filter that can be used to implement the optical system of FIG. 1.

FIG. 8 is a schematic view of yet another embodiment of an optical bandpass filter that can be used to implement the optical system of FIG. 1.

FIG. 9 is a schematic view of the optical bandpass filter of FIG. 8, depicting representative component interaction after thermal expansion.

### DETAILED DESCRIPTION

Optical systems of the invention each incorporate one or more optical filters. In the description that follows, exemplary embodiments of optical systems that incorporate optical bandpass filters will be described. There is no intention, however, to limit the invention to the use of optical bandpass filters. On the contrary, various other types of optical filters could be used, such as lowpass and highpass filters. With respect to bandpass filters, such a filter exhibits a center frequency that is defined, at least in part, by optical properties of one or more filter components. More specifically, a filter component is formed of multiple material layers, each of which is provided at a predetermined thickness. The center frequency of the filter is attributable to the interaction of the refractive indices and optical path lengths of the material layers of the filter component with light propagating through the filter, as well as the optical properties associated with boundaries formed between adjacent material layers.

Embodiments of optical bandpass filters of the invention are constructed so that at least one filter component of each optical filter can be placed under compression and/or tension. By compressing and/or decompressing (tensioning) a filter component, the center frequency of the optical bandpass filter can be affected. For example, when such an optical bandpass filter exhibits an undesired center frequency, the filter component can be compressed and/or tensioned so that it exhibits the desired center frequency. Alternatively, when the center frequency of such an optical bandpass filter tends to drift, such as may occur due to temperature variations, the filter component can be compressed and/or tensioned so that center frequency drift is reduced.

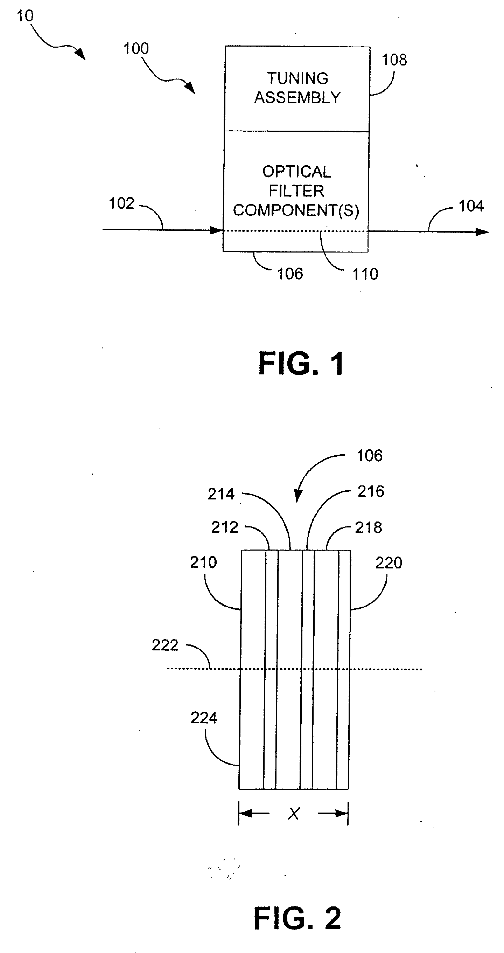

Referring now to the drawings, wherein like reference numerals indicate corresponding components throughout the several views, FIG. 1 schematically depicts a representative portion of an optical system 10 of the present invention. In FIG. 1, optical system 10 includes an embodiment of an optical filter 100, which, in this instance, is adapted to perform bandpass filtering. Optical filter 100 optically communicates with an input transmission medium (depicted by arrow 102) and an output transmission medium (depicted by arrow 104). Input transmission medium 102 is adapted to propagate optical signals to optical filter 100. Output transmission medium 104 is adapted to propagate optical signals from optical filter 100. Free space, optical fibers and integrated optic components are representative examples of transmission media that can be used.

As described before, optical filter 100 inhibits the propagation of all but select wavelengths of light. In particular, the optical filter is adapted to receive optical signals from input transmission medium 102 and, in response to the optical signals, propagates a select frequency or frequencies of light to output transmission medium 104. The frequency or frequencies propagated by the optical filter are defined in relation to a center frequency.

As shown in FIG. 1, optical filter 100 includes a filter component 106 and a tuning assembly 108. Optical filter 100 also defines an optical path 110. As described in greater detail herein, tuning component 108 is able to compress and/or tension filter component 106. A representative filter component 106 is depicted schematically in FIG. 2.

As shown in FIG. 2, filter component 106 is formed of multiple layers of material, *e*.*g*., layers 210 - 220. Selection of materials for forming the layers can be based on mechanical properties, such as elastic deformation properties. Each layer of material can be formed to a predetermined thickness such as is known in the art. Interaction of the refractive indices and optical path lengths of the material layers with the light received by the filter component, as well as the optical properties associated with boundaries formed between adjacent material layers results in filter component 106 inhibiting the propagation of all but a select wavelength(s) of light. This is due to interference of various wavelengths of light of an optical signal as the optical signal propagates along the optical path and traverses various ones of the material layer boundaries.

Filter component 106 also exhibits a propagation axis 222, which typically is defined orthogonal to an exterior surface, *e*.*g*., face 224, of the filter component. Filter component 106 typically is arranged so that propagation axis 222 is parallel to, *e*.*g*., aligned with, the optical path of an optical filter (optical path 110 of FIG. 1). Stated differently, the filter component typically is arranged so that the material layers are orthogonal to the optical path of the optical filter. In this arrangement, since filter component 106 exhibits a thickness *x*, the length of the physical path along which light propagates through the filter component is x.

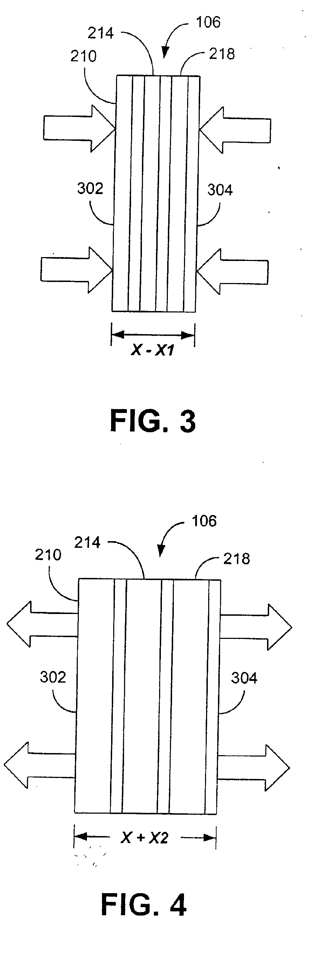

Referring now to FIG. 3, the thickness and associated length of physical path of filter component 106 have been changed compared to that depicted in FIG. 2. More specifically, filter component 106 of FIG. 3 is under axial compression. In particular, opposing faces 302 and 304 of filter component 106 have been urged toward each other so that the filter component exhibits a thickness of *x* - *x*₁. Based on characteristics such as the relative thickness and the mechanical properties of the material layers, one or more of the layers compress in response to the compressive force (depicted by arrows). For example, in FIG. 3, layers 210, 214 and 218 have compressed.

By altering the thickness of one or more of the material layers, the interaction of the layers with the light propagated through the layers can be affected. In particular, optical phase relationships of the light reflected and/or transmitted by the layers can be changed so that optical signals propagating through the filter component are altered compared to previously propagated optical signals. For instance, by altering the relative thickness of two or more of the layers, the filter component may cause a particular wavelength of light to interfere constructively, whereas, prior to altering the relative thickness, the wavelength may have interfered destructively or negligibly.

With respect to the optical bandpass filter of FIG. 3, the change in thickness of filter component 106 and corresponding change in the length of the physical path, have changed the center frequency of the filter so that it is different from the center frequency of light propagated by the configuration depicted in FIG. 2.

In FIG. 4, the thickness and associated length of the physical path of the filter component 106 also have been changed compared to that depicted in FIG. 2. Unlike the configuration of FIG. 3, however, filter component 106 of FIG. 4 is under axial tension. In particular, opposing faces 302 and 304 of filter component 106 have been urged away from each other so that the filter component exhibits a thickness of *x* + *x*₂. For example, in FIG. 4, layers 210, 214 and 218 have stretched in response to a tensile force (depicted by arrows). Due to the change in thickness of the filter component, and a corresponding change in the length of the physical path, the center frequency of light propagated by the configuration depicted in FIG. 4 is different from the center frequency of light propagated by the configuration depicted in FIG. 2.

Note that the change in length of the physical path of the filter component with respect to FIGs. 3 and 4 occurs along a fixed propagation axis. That is, the filter component has not been tilted relative to the optical path of the optical filter. This is in contrast to tilting a filter component and its associated propagation axis to change the length of the physical path of a filter component as is known in the prior art. By altering the length of the physical path of the filter component while substantially maintaining alignment of the propagation axis of the filter component with the optical axis of the filter, such a filter can provide an optical output characterized by a reduced spread compared to filters of the prior art. In particular, uncollimated light, individual rays of which typically propagate through a filter component at different angles, exhibits a reduced spread.

By way of example, if three converging rays of an uncollimated optical beam, each of which is separated from an adjacent ray by 10 degrees, propagate through a filter component that is tilted at 10 degrees, the first ray passes orthogonally through the filter component (0 degrees relative to propagation axis of the filter component), the second ray passes through the filter component at an angle of 10 degrees, and the third ray passes through the filter component at an angle of 20 degrees. Thus, the filter component yields an angular spread of 20 degrees. In contrast, if the same uncollimated beam propagates through the embodiment of the filter component depicted in FIG. 4, the rays pass through the filter component at angles of 10, 0 and 10 degrees respectively. Thus, this filter component yields an angular spread of 10 degrees. This can be significant as the spread in filter pass wavelengths corresponds to the square of the angular spread.

In some embodiments of the invention, the propagation axis of a filter component can be tilted relative to the optical path of the filter. In these embodiments, a change in the length of the physical path of a filter component can be achieved by tilting the filter component and/or altering the thickness of the filter component.

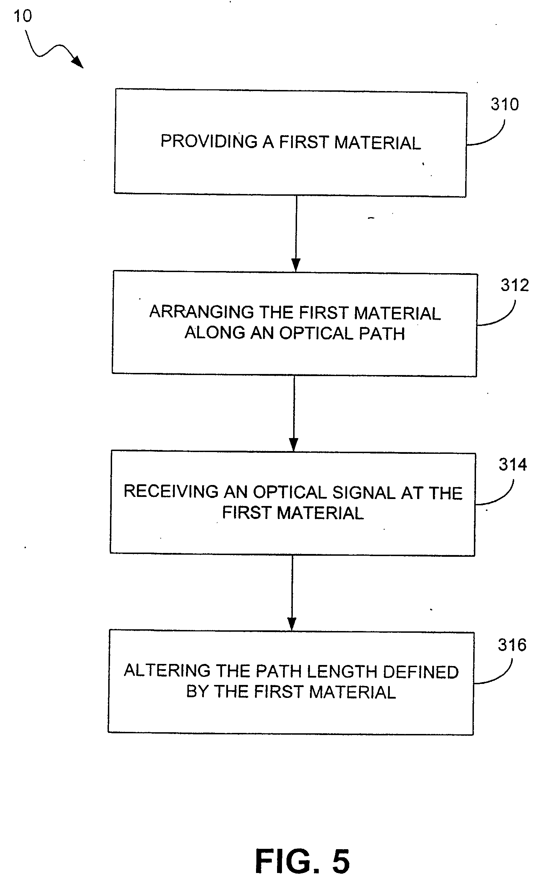

An embodiment of a method aspect of the invention will now be described with reference to the flowchart of FIG. 5. As shown in FIG. 5, the embodiment of the optical system or method 10 may be construed as beginning at block 310, where a first material is provided. Such a material should be capable of propagating one or more optical signals. In block 312, the first material is arranged along an optical path that can be used to propagate one or more optical signals. In block 314, an optical signal is received at the first material. Thereafter, such as depicted in block 316, the length of the physical path defined by the first material can be altered. In particular, the length of the physical path can be altered by compressing and/or tensioning at least a portion of the first material. In this manner, one or more characteristics of the optical signal can be altered. For instance, when the first material is adapted for use in an optical filter, altering the length of the physical path can alter a frequency associated with the optical filter. Note, in some embodiments, the first material also can be tilted (described before).

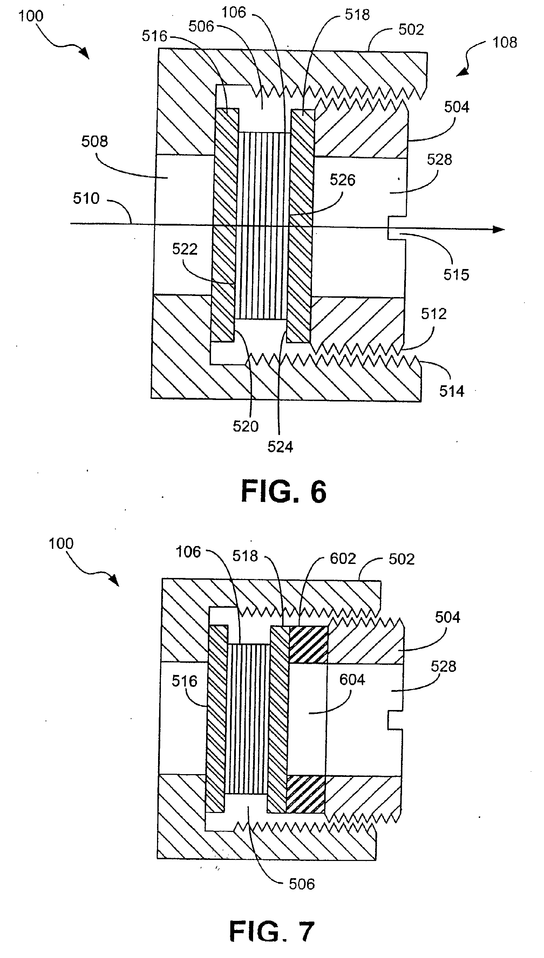

An embodiment of an optical filter 100 that can employ the method described above will now be described with reference to the schematic diagram of FIG. 6. As shown in FIG. 6, optical filter 100 includes a filter component 106 and a tuning assembly 108. Tuning assembly 108 includes a housing 502 and a retaining member 504. The housing defines a cavity 506 that optically communicates with an opening 508. Opening 508 is arranged along optical path 510 of the optical filter. Opening 508 is adapted to permit optical signals to enter the cavity 506.

Filter component 106 is arranged within cavity 506 between a portion of the housing and retaining member 504. Preferably, retaining member 504 adjustably engages the housing so that repositioning the retaining member relative to the housing can apply a force to the filter component (described in detail herein). In the embodiment of FIG. 6, adjustable engagement of the retaining member is achieved by exterior threads 512 of the retaining member engaging interior threads 514 of the housing. Thus, in this embodiment, the retaining member of FIG. 6 can be repositioned by rotating the retaining member relative to the housing. Retaining member 504 of FIG. 6 also includes a slot that is adapted to receive a tool, such as the head of a screw driver, for rotating the retaining member.

In order for the retaining member and housing of the tuning assembly to apply a compressive force to filter component 106 without causing a non-uniform deformation of the material of the filter component, the filter component can be arranged between force distribution members 516 and 518. The force distribution members are formed of relatively rigid material that is capable of propagating optical signals to and/or from the filter component. Each of the force distribution members preferably is shaped with an exterior surface that compliments a corresponding face of the filter component. For example, force distribution member 516 includes a generally planar surface 520, which is adapted to engage face 522 of the filter component, and force distribution member 518 includes a generally planar surface 524, which is adapted to engage face 526 of the filter component. Since the force distribution members are relatively rigid, *i*.*e*., the force distribution members exhibit more rigidity than the filter component, force applied to the force distribution members via interaction of the retaining member and housing tends to be uniformly distributed across the filter component. Note that removal of force distribution member 516 could cause a portion of the filter component to protrude into opening 508 if the tuning assembly applies sufficient compressive force to the filter component. Also note that removal of force distribution member 518 could cause a portion of the filter component to protrude into opening 528 of the retaining member.

An alternative embodiment of an optical filter 100 is depicted in FIG. 7. In FIG. 7, the optical filter includes a force-compensating member 602 that is arranged within cavity 506 between retaining member 504 and a portion of housing 502. Force-compensating member 602 is formed as an annular structure that defines an opening 604. Opening 604 optically communicates with filter component 106 and opening 528 of the retaining member. In some embodiments, the force-compensating member is formed of piezoelectric material. Such a force-compensating member can expand in response to an applied electric potential. Since some piezoelectric materials are capable of generating high displacement forces over relatively small distances, a controlled voltage applied to the force-compensating member can be used to adjust the amount of force applied to the filter component.

By way of example, if the optical filter is adapted to perform bandpass filtering, a control unit (not shown) could be used to monitor the actual center frequency of the optical bandpass filter. If the control unit sensed that the actual center frequency was different than the desired center frequency or, alternatively, if a different center frequency was desired, the control unit could apply an analog voltage to the force-compensating member. Expansion of the force-compensating member in response to the voltage could change the length of the physical path of the filter component so that the desired center frequency is exhibited.

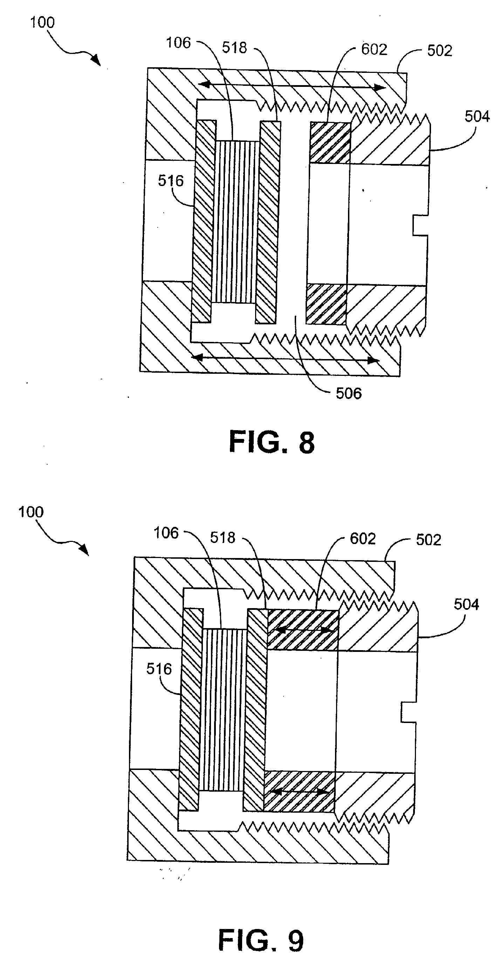

A force-compensating member also could be used to compensate for temperature induced center frequency drift of the optical bandpass filter. For instance, if compressive force on a filter component decreases as the ambient temperature of the optical bandpass filter increases, a voltage can be applied to the force-compensating member. In response to the applied voltage, the force-compensating member could expand and, therefore, increase the compressive force on the filter component to the amount desired. Such a scenario is depicted schematically in FIGs. 8 and 9.

In FIG. 8, housing 502 has expanded due to an increase in temperature. Note that due to different coefficients of thermal expansion of the various components of the optical bandpass filter, the size of cavity 506 has enlarged. This results in a reduced compressive force on filter component 106. In FIG. 9, the force-compensating member expands to reapply the desired compressive force to the filter component. As mentioned before, when the force-compensating member is formed of piezoelectric material, expansion is induced by applying a voltage to the force-compensating member.

In other embodiments, the force-compensating member can be formed of a material characterized by a higher coefficient of thermal expansion than that of the housing, for example. More specifically, the force-compensating member can be formed so that expansion of the housing due to heating is offset by expansion of the force-compensating member. In particular, as the housing and cavity expand, the force-compensating member also expands to substantially maintain the compressive force on the filter component.

The foregoing description has been presented for purposes of illustration and description. It is not intended to be exhaustive or to limit the invention to the precise forms disclosed. Modifications or variations are possible in light of the above teachings. The embodiment or embodiments discussed, however, were chosen and described to provide the best illustration of the principles of the invention and its practical application to thereby enable one of ordinary skill in the art to utilize the invention in various embodiments and with various modifications as are suited to the particular use contemplated.

By way of example, many of the embodiments described herein have been discussed in relation to applying a compressive force to a filter component for altering and/or maintaining the filtering characteristics of the optical filters. Embodiments of the invention also can use tensile forces to alter and/or maintain the filtering characteristics of the optical filters. Additionally, the teachings disclosed herein also may be applicable to types of filters other than optical bandpass filters and filters that operate by transmission. All such modifications and variations are within the scope of the invention as determined by the appended claims when interpreted in accordance with the breadth to which they are fairly and legally entitled.

## Claims

1. An optical system (10) comprising:
an optical filter (100) having an optical filter component (106) and a tuning assembly (108), said optical filter defining an optical path (110);
said optical filter component having a propagation axis (222), said optical filter component exhibiting a length of physical path along said optical path of said optical filter, said optical filter component being adapted to receive an optical signal such that, in response to the optical signal, said optical filter component propagates at least a first frequency of light;
said tuning assembly engaging said optical filter component, said tuning assembly being adapted to alter said length of said physical path of said optical filter component along said propagation axis such that said optical filter component propagates at least a second frequency of light in response to the optical signal, the second frequency of light being different from the first frequency of light.

2. The optical system of claim 1, wherein said tuning assembly includes a housing (502), said housing at least partially encasing said optical filter component.

3. The optical system of claim 2, wherein said tuning assembly includes a retaining member (504) adjustably engaging said housing; and
wherein said optical filter component is arranged between said retaining member and at least a portion of said housing such that adjusting a position of said retaining member relative to said housing can change said length of said physical path of said filter component along said propagation axis.

4. The optical system of claim 3, wherein said housing defines a cavity (506) and an opening (508), said cavity optically communicating with said opening, said opening being adapted to receive the optical signal; and
wherein said filter component is arranged within said cavity.

5. The optical system of claim 4, wherein said tuning assembly includes a force-compensating member (602), said force-compensating member being arranged within said cavity between said retaining member and at least a portion of said housing, said being adapted to expand to apply a compressive force to said optical filter component.

6. The optical system of claim 5, wherein said force-compensating member is formed of a piezoelectric material and is adapted to expand in response to an applied voltage.

7. The optical system of claim 5, wherein said force-compensating member is formed of a material exhibiting a coefficient of thermal expansion selected to substantially maintain the compressive force applied to said optical filter component when said optical filter deforms in response to a change in temperature.

8. The optical system of claim 5, wherein said tuning assembly is adapted to perform at least one of: compressing said optical filter component to decrease said length of said physical path; and tensioning said optical filter component to increase said length of said physical path.

9. An optical system (10) comprising:
an optical filter (100) defining an optical path, said optical filter having an optical filter component (106), said optical filter component having a propagation axis (222), said optical filter component exhibiting a length of physical path along said optical path of said optical filter, said optical filter component being adapted to receive an optical signal such that, in response to the optical signal, said optical filter component propagates at least a first frequency of light; and
means for altering said length of said physical path of said optical filter component along said propagation axis such that said optical filter component propagates at least a second frequency of light in response to the optical signal, the second frequency of light being different from the first frequency of light.

10. A method for propagating an optical signal along an optical path comprising:
providing a first material;
arranging the first material along the optical path, the first material exhibiting a length of physical path along the optical path;
receiving an optical signal at the first material; and
altering the length of the physical path to alter a characteristic of the optical signal by at least one of compressing and tensioning the first material.
